# FASCICULE DE BREVET EUROPEEN

(11) **EP 0 520 845 B1**
(45) Date de publication et mention de la délivrance du brevet: **07.02.1996**
(21) Numéro de dépôt: 92401432.7
(22) Date de dépôt: 26.05.1992
(51) Int. Cl.: G01L 5/04

(54) **Dispositif de mesure en continu de la tension d'une courroie, procédé mis en oeuvre par un tel dispositif**
Verfahren und Vorrichtung zum kontinuierlichen Messen der Spannung eines Riemens
Device and procedure for the continuous measurement of a belt tension

(30) Priorité: 26.06.1991 FR 9107890
(43) Date de publication de la demande: 30.12.1992
(73) Titulaire: RENAULT AUTOMATION, F-92109 Boulogne-Billancourt (FR)
(72) Inventeur: Thurier, Yvan, F-94320 - Thiais (FR)
(74) Mandataire: Ernst-Schonberg, Michel

(56) Documents cités:
- US-A- 2 342 605
- PATENT ABSTRACTS OF JAPAN vol. 12, no. 160 (M-697)(3007) 14 Mai 1988
- ELECTRONIC ENGINEERING. vol. 59, no. 732, Décembre 1987, LONDON GB page 23; 'CCD BASED POSITION SENSOR'

## Description

La présente invention conceme un dispositif de mesure en continu de la tension d'une courroie telle qu'une courroie de distribution par exemple.

Elle conceme également un procédé de mesure mis en oeuvre par un tel dispositif.

La plupart des moteurs thermiques sont aujourd'hui équipés d'une courroie de distribution qui assure la transmission entre le vilebrequin et l'arbre à cames.

Pour assurer un fonctionnement silencieux et une durée de vie maximale, la courroie doit être tendue de manière précise lors de son montage le long d'une chaîne de fabrication d'un moteur.

Le réglage de la tension est obtenu par rotation d'un galet tendeur monté sur un excentrique et, après réglage, la mesure de la tension s'effectue actuellement par l'intermédiaire d'un capteur mécanique qui prend appui sur la courroie.

Le patent Abstract of JAPAN 62.278.352 MITSUBISHI MOTORS CORP décrit un dispositif de contrôle sans contact de la tension d'une courroie à partir d'un système électronique et optique dans lequel on mesure et analyse la fréquence de vibrations de la courroie.

La publication US-A-2.342.605 décrit un dispositif photoélectrique de mesure des vibrations d'une courroie en mouvement dans lequel on analyse le mouvement de l'ombre portée par une portion éclairée de la courroie.

On connaît également, par le document WO 87/05699, un dispositif de mesure en continu de la tension d'une courroie. Ce dispositif de mesure utilise le principe selon lequel la tension d'une courroie est proportionnelle au carré de la fréquence propre des vibrations transversales d'un brin de cette courroie, pour une longueur et une masse linéique données, et la mesure de la tension consiste en fait à mesurer la fréquence propre.

Le dispositif de mesure utilisé comporte des moyens de détection constitués de deux microphones placés chacun en regard d'une face de la courroie, et la vibration de la courroie est entretenue par des moyens mécaniques d'excitation qui frappent la courroie à intervalles de temps réguliers.

L'utilisation de microphones comme moyens de détection présente un inconvénient dans la mesure où ceux-ci sont sensibles au niveau sonore ambiant, ce qui peut provoquer des aléas instantanés de mesure.

La présente invention a pour but de supprimer cet inconvénient en utilisant, en remplacement des microphones, des moyens de détection opto-électroniques.

La présente invention a pour objet un dispositif de mesure en continu de la tension d'une courroie, comportant des moyens de détection, un appareil de mesure relié électriquement aux moyens de détection, et des moyens d'excitation entretenant les vibrations de la courroie.

Selon l'invention ces moyens de détection sont constitués d'au moins une source lumineuse placée en regard d'un côté de la courroie et de deux surfaces photosensibles placées en regard de l'autre côté de la courroie, les vibrations de la courroie augmentant la superficie éclairée d'une surface photosensible et diminuant d'autant la superficie éclairée de l'autre surface photosensible, et inversement, alternativement.

Selon une caractéristique de l'invention la source lumineuse est constituée d'une diode électroluminescente et les deux surfaces photosensibles sont constituées de deux photorécepteurs.

Selon une autre caractéristique de l'invention les moyens de détection sont montés sur des supports l'ensemble ainsi monté constituant une fourche de détection.

D'autre part le dispositif mécanique d'excitation, décrit dans le document WO 87/05699, engendre des discontinuités à chaque frappe et interdit alors toute mesure à cet instant.

La présente invention a également pour but d'assurer une mesure sans discontinuité et ce but est atteint en utilisant des moyens d'excitation qui agissent sans contact direct avec la courroie.

Selon l'invention, les moyens d'excitation sont constitués de deux haut-parleurs montés chacun à l'extrémité de grand diamètre d'un cône acoustique, les extrémités de petit diamètre des cônes acoustiques étant installées chacune en regard d'une face de la courroie.

Selon une caractéristique de l'invention les extrémités de petit diamètre des cônes comportent chacune un coude, les cônes étant sensiblement parallèles et les haut-parleurs sensiblement côte à côte.

Selon une autre caractéristique de l'invention les haut-parleurs sont installés dans une chambre fermée par un couvercle.

Selon encore une autre caractéristique de l'invention les deux coudes, les deux cônes, les deux haut-parleurs et le couvercle constituent une fourche acoustique.

Enfin selon encore une caractéristique de l'invention, la fourche de détection est installée sur un support basculable permettant, après avoir placé la fourche acoustique de part et d'autre des faces de la courroie, de placer à son tour la fourche de détection de part et d'autre des côtés de la courroie.

La présente invention a également pour objet un procédé de mise en oeuvre du dispositif selon l'une des revendications 1-9, caractérisé en ce que l'opération de détection des vibrations, consiste à placer, d'un côté de la courroie, au moins une source lumineuse, et de l'autre côté de la courroie, deux surfaces photosensibles dont la superficie varie en fonction des déplacements de la courroie.

Selon une caractéristique de ce procédé de mesure, on capte les vibrations de différents brins de la courroie et on calcule une tension équivalente. En effet, dans la pratique la courroie dont on veut mesurer la tension passe sur plusieurs poulies qui ne sont pas libres de couple. Par conséquent chaque brin délimité par deux poulies, peut être soumis à une tension différente, et l'on effectue alors plusieurs mesures simultanées, à l'aide de plusieurs dispositifs de mesure, un pour chaque brin de la courroie, et on calcule une tension équivalente aussi proche que possible de la tension uniformisée, c'est-à-dire celle que l'on aurait si les poulies étaient libres de couple.

Il est décrit ci-après à titre d'exemple et en référence aux dessins annexés un dispositif de mesure selon l'invention, permettant la mesure de la tension d'une courroie crantée de distribution d'un moteur à combustion interne.
La figure 1 montre le dispositif de mesure mis en place autour d'une courroie;
la figure 2 montre le dispositif de mesure selon II de la figure 1;
la figure 3 montre de manière plus détaillée que la figure 1 la fourche de détection du dispositif et le support basculable;
la figure 4 est une vue selon IV de la figure 3, la fourche de détection étant, dans ces figures 3 et 4, alignée avec son support.
la figure 5 montre seulement un côté de la courroie et les deux surfaces photosensibles vues par la source lumineuse.

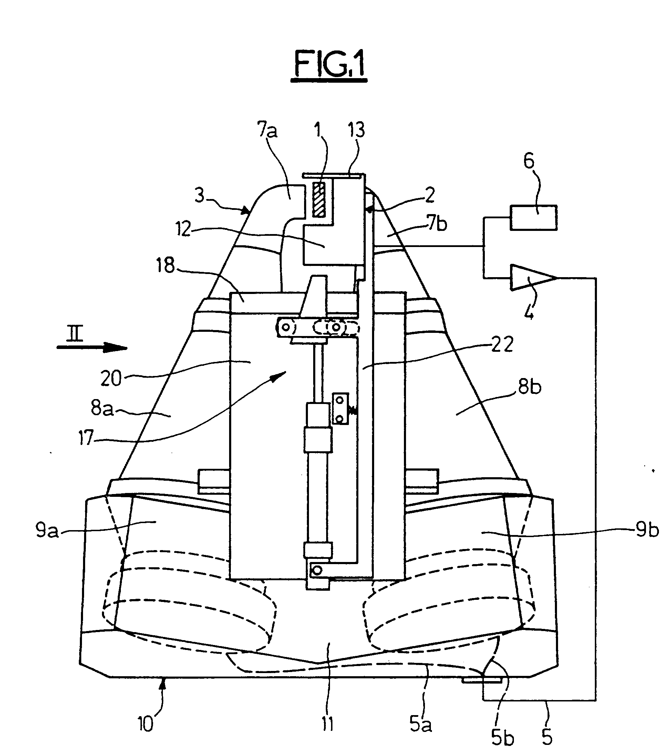

La figure 1 montre une courroie 1 en coupe et le dispositif de mesure de l'invention constitué d'une fourche de détection 2 et d'une fourche acoustique 3. La fourche de détection 2 est reliée électriquement à un amplificateur différentiel 4 et à un appareil de mesure 6 tandis que l'amplificateur 4 est relié à la fourche acoustique par l'intermédiaire d'un câble 5. L'appareil de mesure 6, tel qu'un fréquence mètre, permet de lire la tension de la courroie.

La fourche acoustique 3 comporte deux coudes 7a, 7b dont leur embouchure est située en regard d'une face de la courroie, deux cônes acoustiques 8a, 8b sensiblement parallèles et prolongeant les deux coudes, et deux haut-parleurs 9a, 9b reliés par leur partie conique à l'extrémité de grand diamètre de chaque cône acoustique 8a, 8b, un couvercle 10 coiffant les deux haut-parleurs 9a, 9b.

Le câble de liaison 5 comporte deux fils 5a, 5b, le fil 5a étant raccordé au haut-parleur 9a et le fil 5b étant raccordé au haut-parleur 9b.

Chaque coude 7a, 7b est relié à l'extrémité de petit diamètre d'un cône respectivement 8a, 8b de façon étanche, le couvercle 10 étant lui-même relié à l'extrémité de grand diamètre de chaque cône 8a, 8b de façon étanche.

L'intérieur du couvercle constitue une chambre unique 11 dans laquelle sont logés côte à côte les deux haut-parleurs 9a, 9b.

Entre chaque extrémité d'un coude 7a, 7b et une face de la courroie subsiste un intervalle qui permet à la courroie de vibrer.

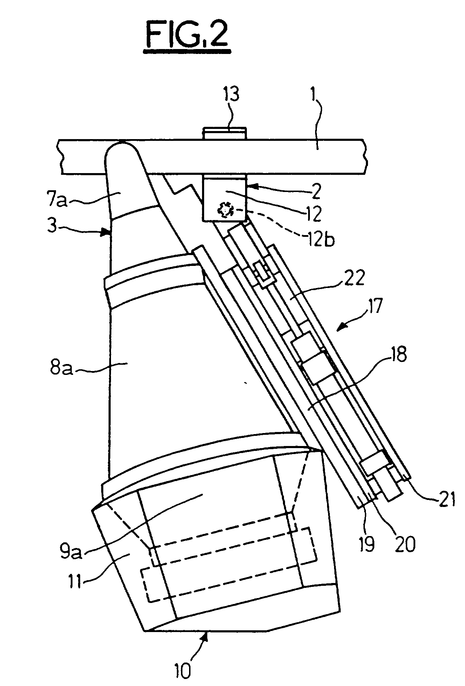

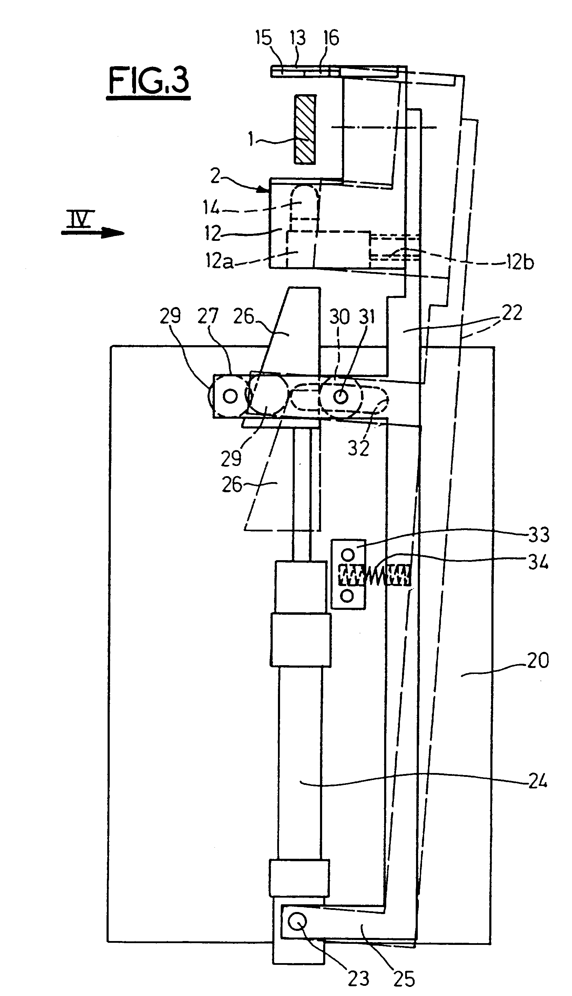

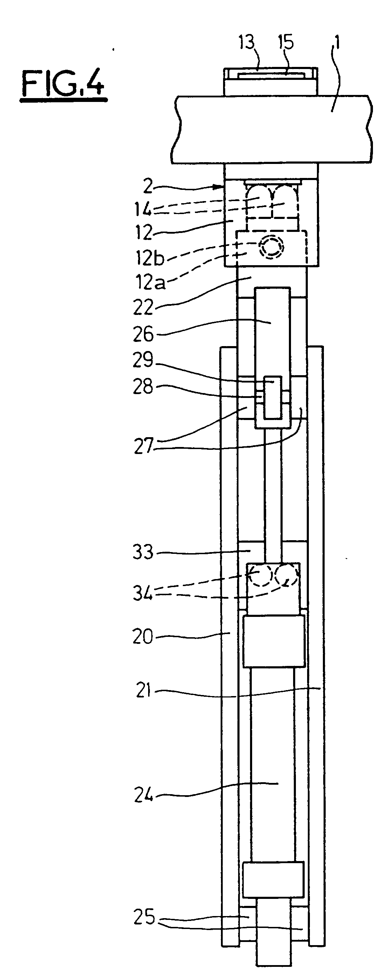

La fourche de détection 2 comporte un support principal 12 et un support supérieur 13 vissé sur le support 12. Le support 12 reçoit deux sources électroluminescentes 14 et le support 13 reçoit deux surfaces photosensibles 15, 16, comme cela est visible en figures 3 et 4. Les sources 14 sont situées en regard d'un côté de la courroie, tandis que les surfaces photosensibles 15, 16 sont situées en regard de l'autre côté de la courroie. Les sources 14 sont des diodes électroluminescentes raccordées à un circuit imprimé non représenté mais situé dans l'espace libre 12a du support 12, les surfaces photosensibles étant également reliées à ce circuit imprimé. Les connexions électriques reliant les appareils 4 et 6 sortent de la fourche de détection par l'intermédiaire d'un axe creux 12b. Cette fourche de détection 2 est montée sur un support 17 par l'intermédiaire de l'axe creux 12b, ce qui assure une rotation de la fourche par rapport à son support 17 comme cela est visible en figure 2. En effet cette figure 2 montre le dispositif de mesure incliné par rapport à la courroie 1 il est donc nécessaire d'incliner la fourche de détection 2 par rapport à son support 17 pour que la source luminescence 14 et les deux surfaces de détection 15, 16 soient placées perpendiculairement à la courroie. Le support 17 comporte un balancier 22 basculable, (voir figure 3) afin de permettre d'abord la mise en place des deux coudes 7a, 7b de la fourche acoustique en regard des faces de la courroie puis ensuite, par basculement du support 17, la mise en place de la fourche de détection 2. Ce support 17 comporte en outre, comme cela est visible en figure 2, une plaque 18 fixée sur les cônes acoustiques 8a, 8b puis une deuxième plaque 19 fixée sur la plaque 18 et enfin deux plaques 20, 21 entre lesquelles le balancier 22, portant la fourche de détection 2, pivote, autour d'un axe 23 visible en figure 3.

La partie fixe d'un vérin 24 est installé entre les deux fourches inférieures 25 du balancier 22 et l'extrémité de la partie mobile de ce vérin 24 comporte une came 26 qui glisse entre les deux fourches supérieures 27 du balancier 22. Les extrémités des fourches 27 portent un axe 28 sur lequel tourne un galet 29, qui roule sur la came 26.

Un galet 30, visible en figure 3, tourne sur un axe 31 solidaire des deux plaques 20 et 21. Ce galet 30 sert d'appui et de guidage pour la came 26. Les deux fourches supérieures 27 du balancier 22 comportent chacune une lumière 32 visible en figure 3, ces lumières permettant le pivotement du balancier malgré la présence de l'axe 31 qui traverse les deux fourches 27. Entre les deux plaques 20, 21 est installé, sensiblement au milieu du balancier 22, un support 33 qui reçoit deux ressorts 34 assurant le rappel du balancier vers la position inclinée lorsque la came 26 est en position basse.

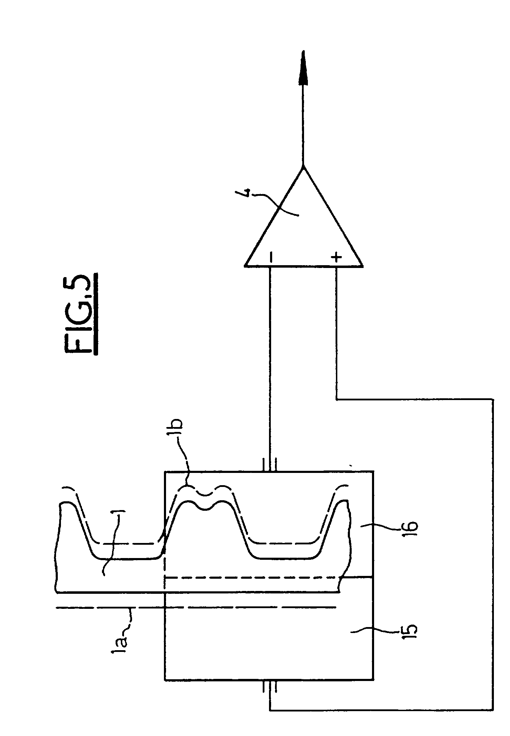

La figure 5 montre la courroie 1 et les deux surfaces photosensibles 15, 16 vues depuis la source luminescente 14. La courroie, qui est dans ce cas une courroie crantée, est vue de côté. Lorsque la courroie ne vibre pas elle obstrue la surface photosensible 15 sur une petite partie de sa surperficie et la surface photosensible 16 sur environ la moitié de sa surperficie. Lorsque la courroie vibre entre deux positions extrêmes 1a et 1b les deux surfaces photosensibles sont obstruées plus ou moins et alternativement. En effet lorsque la face non crantée de la courroie 1 occupe la position la, la surface photosensible 15 est plus obstruée et la surface 16 moins obstruée, et inversement, lorsque la face crantée de la courroie 1 occupe la position 1b, la surface photosensible 16 n'est plus obstruée tandis que la surface photosensible 15 l'est moins, et même totalement découverte. Cette modification des surfaces engendre une modification des signaux reçus par l'amplificateur 4 et permet de déterminer ainsi l'amplitude des vibrations.

Un tel dispositif fonctionne de la manière suivante:
la courroie peut entrer en vibration sous l'action d'un bruit ambiant ou sous l'action d'une impulsion générée de façon électronique et appliquée à la courroie par les haut-parleurs. Quelle que soit la manière dont on a initialisé les vibrations celles-ci reflètent la tension de la courroie car cette tension est fonction de la fréquence propre d'un brin de la courroie selon la relation T = 4m l f.
- **T** :: tension de la courroie
- **m** :: masse linéique de la courroie
- **l** :: longueur libre du brin
- **f** :: fréquence propre de ce brin

La fourche de détection 2, capte les vibrations de la courroie et les transmet, via l'amplificateur 4 aux haut-parleurs 9a, 9b. Chaque haut-parleur vibre et chaque colonne d'air parcourant le cône acoustique 8a, 8b vient alors frapper la courroie et la fait vibrer.

Les vibrations sont ainsi entretenues et comme la fourche de détection 2 est également reliée au fréquence-mètre 6, la valeur de la fréquence propre s'affichera sur le fréquence-mètre de manière permanente, et on connaîtra ainsi la tension de la courroie de manière précise et continue, ce qui peut permettre un réglage de la courroie par action sur un excentrique classique, jusqu'à la tension désirée.

## Revendications

1. Dispositif de mesure en continu de la tension d'une courroie (1), comportant des moyens de détection (14, 15, 16), un appareil de mesure (6) relié électriquement aux moyens de détection, et des moyens d'excitation (9a, 9b) entretenant les vibrations de la courroie, caractérisé en ce que les moyens de détection sont constitués d'au moins une source lumineuse (14) placée en regard d'un côté de la courroie, et de deux surfaces photosensibles (15, 16) placées en regard de l'autre côté de la courroie, les vibrations de la courroie augmentant la superficie éclairée d'une surface photosensible et diminue d'autant la superficie éclairée de l'autre surface photosensible et inversement, alternativement.

2. Dispositif selon la revendication 1, caractérisé en ce que la source lumineuse (14) est constituée d'une diode électroluminescente.

3. Dispositif selon la revendication 1 ou 2, caractérisé en ce que les surfaces photosensibles (15, 16) sont constituées de deux photorécepteurs.

4. Dispositif selon l'une des revendications 1 à 3, caractérisé en ce que les moyens de détection (14, 15, 16) sont montés sur des supports (12, 13), l'ensemble ainsi monté constituant une fourche de détection (2).

5. Dispositif selon l'une des revendications 1 à 4, caractérisé en ce que les moyens d'excitation sont constitués de deux haut-parleurs (9a, 9b) montés chacun à l'extrémité de grand diamètre d'un cône acoustique (8a, 8b), les extrémités de petit diamètre des cônes acoustiques étant installées chacune en regard d'une face de la courroie (1).

6. Dispositif selon la revendication 5, caractérisé en ce que les extrémités de petit diamètre des cônes comporte chacune un coude (7a, 7b), les cônes (8a, 8b) étant sensiblement parallèles et les haut-parleurs (9a, 9b) sensiblement côte à côte.

7. Dispositif selon la revendication 5 ou 6, caractérisé en ce que les haut-parleurs (9a, 9b) sont installés dans une chambre (11) fermée par un couvercle (10).

8. Dispositif selon la revendication 7, caractérisé en ce que les coudes (7a, 7b), les deux cônes (8a, 8b), les deux haut-parleurs (9a, 9b) et le couvercle (10) constituent une fourche acoustique (3).

9. Dispositif selon l'une des revendications précédentes, caractérisé en ce que la fourche de détection (2) est installée sur un support basculable (17) permettant d'introduire d'abord la fourche acoustique (3) de part et d'autre des faces de la courroie, puis de placer à son tour la fourche de détection (2) de part et d'autre des côtés de la courroie.

10. Procédé de mise en oeuvre du dispositif selon l'une des revendications 1-9, caractérisé en ce que l'opération de détection des vibrations, consiste à placer, d'un côté de la courroie, au moins une source lumineuse (14), et de l'autre côté de la courroie, deux surfaces photosensibles (15, 16) dont la superficie varie en fonction des déplacements de la courroie.

11. Procédé de mesure selon la revendication 10, caractérisé en ce que l'on capte les vibrations de différents brins de la courroie et en ce que l'on calcule une tension équivalente.

## Patentansprüche

1. Vorrichtung zur kontinuierlichen Messung der Spannung eines Riemens (1), mit einer Detektoranordnung (14, 15, 16), mit einem Meßgerät (6), das elektrisch mit der Detektoranordnung verbunden ist und mit einer Erregungsanordnung (9a, 9b), welche Schwingungen des Riemens aufrecht erhält, dadurch gekennzeichnet, daß die Detektoranordnung aus wenigstens einer Lichtquelle (14) besteht, die gegenüber einer Seite des Riemens angeordnet ist und aus zwei lichtempfindlichen Flächen (15, 16) besteht, die gegenüber der anderen Seite des Riemens angeordnet sind, wobei abwechselnd die Schwingungen des Riemens den beleuchteten Oberflächenbereich einer lichtempfindlichen Fläche vergrößern und zugleich den beleuchteten Oberflächenbereich der anderen lichtempfindlichen Fläche verkleinern und umgekehrt.

2. Vorrichtung nach Anspruch 1, dadurch gekennzeichnet, daß die Lichtquelle (14) aus einer Elektrolumineszenz-Diode besteht.

3. Vorrichtung nach Anspruch 1 oder 2, dadurch gekennzeichnet, daß die lichtempfindlichen Flächen (15, 16) aus zwei Photoempfängern bestehen.

4. Vorrichtung nach einem der Ansprüche 1 bis 3, dadurch gekennzeichnet, daß die Detektoranordnung (14, 15, 16) auf Halterungen (12, 13) angeordnet ist und daß die dergestalt gebildete Anordnung eine Detektorgabel (2) bildet.

5. Vorrichtung nach einem der Ansprüche 1 bis 4, dadurch gekennzeichnet, daß die Erregungsanordnung aus zwei Lautsprechern (9a, 9b) besteht, die jeweils am Ende mit dem großen Durchmesser eines akustischen Kegels (8a, 8b) angeordnet sind, während die Enden mit dem kleinen Durchmesser der akustischen Kegel jeweils gegenüber einer Seite des Riemens (1) angeordnet sind.

6. Vorrichtung nach Anspruch 5, dadurch gekennzeichnet, daß die Enden mit dem kleinen Durchmesser der Kegel jeweils ein Kniestück (7a, 7b) aufweisen, wobei die Kegel (8a, 8b) im wesentlichen parallel und die Lautsprecher (9a, 9b) im wesentlichen nebeneinander angeordnet sind.

7. Vorrichtung nach Anspruch 5 oder 6, dadurch gekennzeichnet, daß die Lautsprecher (9a, 9b) in einer durch einen Deckel (10) abgeschlossenen Kammer (11) angeordnet sind.

8. Vorrichtung nach Anspruch 7, dadurch gekennzeichnet, daß die Kniestücke (7a, 7b), die beiden Kegel (8a, 8b), die beiden Lautsprecher (9a, 9b) und der Deckel (10) eine akustische Gabel (3) bilden.

9. Vorrichtung nach einem der vorhergehenden Ansprüche, dadurch gekennzeichnet, daß die Detektorgabel (2) auf einer verschwenkbaren Halterung (17) gelagert ist, so daß zuerst das Einsetzen der akustischen Gabel (3) beidseits der Seiten des Riemens und danach das Einsetzen der Detektorgabel (2) beidseits der Seiten des Riemens ermöglicht wird.

10. Verfahren, das mit der Vorrichtung nach einem der Ansprüche 1 bis 9 durchgeführt wird, dadurch gekennzeichnet, daß der Schritt der Detektion der Schwingungen darin besteht, auf einer Seite des Riemens wenigstens eine Lichtquelle (14) anzuordnen und auf der anderen Seite des Riemens zwei lichtempfindliche Flächen (15, 16) anzuordnen, deren Oberflächenbereich als Funktion der Verschiebungen des Riemens variiert.

11. Meßverfahren nach Anspruch 10, dadurch gekennzeichnet, daß die Schwingungen der verschiedenen Riementrume gemessen werden und daß eine Äquivalenzspannung berechnet wird.

## Claims

1. Apparatus for continuously measuring the tension of a belt (1) comprising detection means (14, 15, 16), a measuring device (6) electrically connected to the detection means, and excitation means (9a, 9b) for maintaining vibrations of the belt, characterised in that the detection means are formed by at least one light source (14) disposed facing one side of the belt, and two photosensitive surfaces (15, 16) disposed facing the other side of the belt, the vibrations of the belt increasing the illuminated surface area of one photosensitive surface and correspondingly reducing the illuminated surface area of the other photosensitive surface and conversely alternately.

2. Apparatus according to claim 1 characterised in that the light source (14) is formed by a light emitting diode.

3. Apparatus according to claim 1 or claim 2 characterised in that the photosensitive surfaces (15, 16) are formed by two photoreceivers.

4. Apparatus according to one of claims 1 to 3 characterised in that the detection means (14, 15, 16) are mounted on supports (12, 13), the assembly mounted in that way constituting a detection fork (2).

5. Apparatus according to one of claims 1 to 4 characterised in that the excitation means are formed by two loudspeakers (9a, 9b) each mounted at the large-diameter end of an acoustic cone (8a, 8b), the small-diameter ends of the acoustic cones each being installed facing a face of the belt (1).

6. Apparatus according to claim 5 characterised in that the small-diameter ends of the cones each comprise a bend portino (7a, 7b), the cones (8a, 8b) being substantially parallel and the loudspeakers (9a, 9b) being substantially side-by-side.

7. Apparatus according to claim 5 or claim 6 characterised in that the loudspeakers (9a, 9b) are installed in a chamber (11) which is closed by a cover (10).

8. Apparatus according to claim 7 characterised in that the bend portions (7a, 7b), the two cones (8a, 8b), the two loudspeakers (9a, 9b) and the cover (10) constitute an acoustic fork (3).

9. Apparatus according to one of the preceding claims characterised in that the detection fork (2) is installed on a rockable support (17) which makes it possible to introduce firstly the acoustic fork (3) on respective sides of the faces of the belt and then in turn to place the detection fork (2) on respective sides of the faces of the belt.

10. A process for use of the apparatus according to one of claims 1 to 9 characterised in that the operation of detecting the vibrations comprises placing at least one light source (14) on one side of the belt and two photosensitive surfaces (15, 16) on the other side of the belt, the surface area of the photosensitive surfaces varying in dependence on the displacements of the belt.

11. A measuring process according to claim 10 characterised in that the vibrations of different runs of the belt are sensed and that an equivalent tension is calculated.
